# EUROPÄISCHE PATENTSCHRIFT

(11) **EP 1 599 967 B1**
(45) Veröffentlichungstag und Bekanntmachung des Hinweises auf die Patenterteilung: **25.10.2006**
(21) Anmeldenummer: 04713524.9
(22) Anmeldetag: 23.02.2004
(51) Int. Cl.: H04L 12/26, H04L 12/28

(54) **VERFAHREN UND VORRICHTUNG ZUR ERMITTLUNG UND GEGEBENENFALLS ZUR BEWERTUNG VON STÖRUNGEN UND/ODER BLOCKIERUNGEN IN DER KOMMUNIKATION MIT HAUSGERÄTEN**
METHOD AND DEVICE FOR DETERMINING AND OPTIONALLY EVALUATING DISTURBANCES AND/OR INTERRUPTIONS IN THE COMMUNICATION WITH DOMESTIC APPLIANCES
PROCEDE ET SYSTEME POUR DETERMINER ET EVENTUELLEMENT EVALUER DES DERANGEMENTS ET/OU DES BLOCAGES AU NIVEAU DE LA COMMUNICATION AVEC DES APPAREILS MENAGERS

(30) Priorität: 24.02.2003 DE 10307826
(43) Veröffentlichungstag der Anmeldung: 30.11.2005
(73) Patentinhaber: BSH Bosch und Siemens Hausgeräte GmbH, 81739 München (DE)
(72) Erfinder: BUCHNER, Theo, 93333 Neustadt (DE); HERTEL, Udo, 93059 Regensburg (DE); WERKMANN, Horst, 85276 Pfaffenhofen/Ilm (DE)
(86) Internationale Anmeldenummer: PCT/EP2004/001771
(87) Internationale Veröffentlichungsnummer: WO 2004/075478

(56) Entgegenhaltungen:
- WO-A-01/86879
- US-A1- 2002 000 092
- US-A1- 2002 194 319
- US-B1- 6 473 407

## Beschreibung

Die Erfindung bezieht sich auf ein Verfahren und eine Vorrichtung zur Ermittlung von auftretenden Störungen und/oder Blockierungen in der Kommunikation mit Hausgeräten, die mit Kommunikationseinheiten zur Abgabe und/oder Aufnahme von Kommunikationssignalen durch ein erstes Kommunikationsnetz verbunden sind, das über wenigstens eine Übergangseinrichtung mit zumindest einem externen Steuerungs- und/oder Überwachungsgerät verbindbar ist.

Für die Durchführung von Kommunikationen mit Hausgeräten zu deren Steuerung und Überwachung ist es bekannt (WO 99 65192 A), die betreffenden Hausgeräte an einem lokalen Netzwerk (LAN) anzuschließen. In dem betreffenden Zusammenhang geht es darum, die betreffenden Hausgeräte mit Programmen bzw. Diensten zu betreiben, die von Dienstanbietem (Serviceprovider) über das Internet zur Verfügung gestellt werden. Die Software des für das jeweilige Hausgerät benötigten Dienstes wird von dem jeweils in Frage kommenden Dienstanbieter über das Internet einem Netzwerkoperator-Server und/oder einem Serviceplattform-Server zur Verfügung gestellt, der mit dem erwähnten Kommunikationsnetzwerk verbunden ist. Über eventuell bei derartigen Kommunikationen mit den Hausgeräten auftretende Störungen oder Blockierungen sowie über Maßnahmen zur Ermittlung und gegebenenfalls zur Bewertung derartiger Störungen und/oder Blockierungen ist aus WO 99 65192 A indessen nichts bekannt.

Es sind ferner ein Verfahren und eine Vorrichtung zur Festlegung von programmierbaren Merkmalen eines Gerätes bei einer Vielzahl von Geräten bekannt (WO 00 43870 A). Als Geräte sind in dem betreffenden Zusammenhang Hausgeräte angesprochen, wie Kühlschränke, konventionelle Öfen, Mikrowellenöfen, Geschirrspüler, Ventitations- und Klimageräte, Heim-Sicherheitssysteme, etc.. Die genannten Hausgeräte sind mit einem globalen Computernetzwerk verbunden, über das den betreffenden Hausgeräten gewünschte Programme zur Verfügung gestellt werden können. Die Verbindungen der betreffenden Hausgeräte mit Zugangseinrichtungen zu dem genannten globalen Computemetzwerk können drahtgebundene oder drahtlose Verbindungen sein. Im Zusammenhang mit drahtgebundenen Verbindungen ist in dem betreffenden Zusammenhang auch die Verwendung einer Stromversorgungsleitung zwischen einem Hausgerät und einem Dienstanbieter für die Übertragung von Befehlen angesprochen. Allerdings ist auch aus WO 00 43870 A über bei derartigen Kommunikationen mit den Hausgeräten auftretende Störungen oder Blockierungen sowie über Maßnahmen zur Ermittlung und gegebenenfalls zur Bewertung derartiger Störungen und/oder Blockierungen nichts bekannt.

Es ist schließlich im Zusammenhang mit der Steuerung und Überwachung von Hausgeräten vorgeschlagen worden (DE 102 08147.6), die in einem Gebäude befindlichen Hausgeräte über ein erstes Kommunikationsnetz an einem sogenannten Residential-Gateway anzuschließen, bei dem es sich um eine Gebäude-Gateway-Rechnervorrichtung oder generell um eine Übergangseinrichtung handelt. Diese Übergangseinrichtung ist mit einem zweiten Kommunikationsnetz, und zwar insbesondere mit einem öffentlichen Kommunikationsnetz verbindbar, mit dem unter anderem ein Verwaltungsrechner und eine externe Steuereinheit verbindbar sind, die mit den oben erwähnten Hausgeräten in Verbindung treten können. Obwohl in dem betreffenden Zusammenhang eine Vielzahl von Kommunikationen erläutert ist, die zwischen verschiedenen Einrichtungen durchgeführt werden, sind indessen im Zuge der jeweiligen Kommunikation auftretende Störungen und/oder Blockierungen sowie Maßnahmen zur Ermittlung derartiger Störungen bzw. Blockierungen und gegebenenfalls zu deren Bewertung in DE 102 08147.6 nicht angesprochen.

In WO 01 86879 A1 ist ein Verfahren zur Steuerung und/oder Überwachung von Systemeinheiten, insbesondere Haushaltsgeräten, offenbart, welche über ein lokales Netzwerk miteinander verbunden sind, das seinerseits mit einem globalen Netzwerk verbunden ist. In diesem globalen Netzwerk ist ein Applikations-Server integriert, der als einen angebotenen Dienst beispielsweise ein Diagnose-Modul umfasst, so dass bei Feststellung einer Fehlfunktion in einer der angeschlossenen Systemeinheiten automatisch eine Diagnose durchgeführt werden kann.

Generell können in einer Vorrichtung der eingangs genannten Art die Kommunikationen mit den erwähnten Hausgeräten zwar in den meisten Fällen problemlos abgewickelt werden. Allerdings kann die jeweilige Kommunikation doch in einigen Fällen durch Kurzzeitstörungen beeinträchtigt oder durch Langzeitstörungen sogar blockiert werden. In derartigen Fällen ist es bisher nur durch zeitlich aufwendige und kostenintensive Messungen im betreffenden Kommunikationsnetz möglich, die Art, den Umfang und die Dauer der jeweiligen Störung zu ermitteln. In diesem Zusammenhang ist zu erwähnen, dass bei der Datenübertragung über Stromversorgungsleitungen beispielsweise von einer Zuverlässigkeit von 98% ausgegangen werden kann (siehe hierzu Handbuch 2000, "Sehen statt Hören mit dem HGT-Lichtsystem", LS-Handbuch 2000_pdf).

Es ist somit angezeigt, im Falle des Auftretens von kurzzeitigen oder andauernden Störungen und/oder Blockierungen in der Kommunikation mit Hausgeräten Maßnahmen zu treffen, um derartige Störungen zu ermitteln und gegebenenfalls zu bewerten.

Der Erfindung liegt daher die Aufgabe zugrunde, einen Weg zu zeigen, wie bei einem Verfahren und einer Vorrichtung der eingangs genannten Art auf relativ einfache Weise kurzzeitig oder dauernd auftretende Störungen und/oder Blockierungen in der Kommunikation mit Hausgeräten ermittelt und gegebenenfalls bewertet werden können, ohne dass dazu zeitlich aufwendige und kostenintensive Messungen, insbesondere durch zusätzliches Personal vor Ort mit entsprechenden Messmitteln erforderlich sind.

Gelöst wird die vorstehend aufgezeigte Aufgabe durch ein Verfahren gemäss dem Anspruch 1 und eine Vorrichtung gemäss dem Anspruch 10.

Dies bringt den Vorteil mit sich, dass auf besonders einfache Weise, nämlich ohne Durchführung von zeitlich aufwendigen und kostenintensiven Messungen vor Ort durch zusätzliches Personal jeweils auftretende Störungen und/oder Blockierungen in der Kommunikation mit den Hausgeräten ermittelt werden können. Insbesondere können die erfassten Störungen und/oder Blockierungen nach ihrer Art, ihrem Umfang und ihrer Dauer bewertet werden. Dadurch können auf besonders einfache Weise eine statistische Auswertung und eine Aussage über die Qualität des Kommunikationsmediums, das heißt des erwähnten ersten Kommunikationsnetzes hinsichtlich Störungen und/oder Blockierungen erfolgen. So kann beispielsweise festgestellt werden, ob bei den mit dem betreffenden ersten Kommunikationsnetz verbundenen Hausgeräten eventuell selbst ein Defekt vorliegt oder ob die Störungen und/oder Blockierungen beispielsweise durch andere Geräte oder Dienste hervorgerufen werden.

Durch die Aktivierung des genannten Prüfprogramms werden die Kommunikationseinheiten der zu dem genannten ersten Kommunikationsnetz gehörenden Hausgeräte in einen bestimmten festgelegten Modus versetzt, in welchem die betreffenden Kommunikationseinheiten entsprechend einem definierten Protokoll kommunizieren, und im Zuge der Kommunikation entsprechend diesem definierten Protokoll werden die in dem betreffenden ersten Kommunikationsnetz auftretenden Störungen und/oder Blockierungen ermittelt. Vorzugsweise werden die ermittelten Störungen und/oder Blockierungen nach Art, umfang und Dauer bewertet. Hierdurch ergibt sich der Vorteil einer besonders sicheren Ermittlung und gegebenenfalls Bewertung von kurzzeitig oder dauernd auftretenden Störungen und/oder Blockierungen in der Kommunikation mit den erwähnten Hausgeräten. Die Kommunikation entsprechend dem erwähnten definierten Protokoll lässt nämlich im Falle von kurzzeitig oder dauernd auftretenden Störungen und/oder Blockierungen auf besonders einfache Weise Rückschlüsse darauf zu, ob die betreffenden Störungen und/oder Blockierungen auf die Hausgeräte und/oder deren erstes Kommunikationsnetzwerk zurückzuführen sind oder auf andere Störungseinflüsse zurückgehen.

Die Aktivierung des genannten Prüfprogramms in der betreffenden Übergangseinrichtung erfolgt zweckmäßigerweise von einem mit dieser verbindbaren Steuerungs- und/oder Überwachungsgerät aus auf eine an dieses Gerät abgegebene gesonderte Meldung hin von wenigstens einem der genannten Hausgeräte und/oder von einer diesem zugehörigen weiteren Kommunikationseinrichtung. Dies bringt den Vorteil mit sich, dass die Aktivierung des genannten Prüfprogramms auf eine individuelle Meldung hin von dem erwähnten Steuerungs- und/oder Überwachungsgerät aus vornehmbar ist. Das betreffende Prüfprogramm kann dabei entweder in der genannten Überwachungseinrichtung bereits selbst installiert sein, oder es kann zu seiner Aktivierung in diese Überwachungseinrichtung durch das erwähnte Steuerungs- und/oder Überwachungsgerät gesteuert geladen werden. In diesem Zusammenhang ist es auch möglich, dass beispielsweise unterschiedliche Prüfprogramme je nach gemeldetem Störungs- und/oder Blockierungsfall zur Verfügung stehen und verwendet werden.

Alternativ zu der vorstehend betrachteten Maßnahme wird die Aktivierung des genannten Prüfprogramms in der betreffenden Übergangseinrichtung automatisch durch die betreffende Übergangseinrichtung selbst ausgelöst, nachdem diese durch sporadische oder in größeren Zeitabständen erfolgende Überwachung des genannten ersten Kommunikationsnetzes Störungen und/oder Blockierungen in diesem ermittelt hat. Durch diese Maßnahme wird der Vorteil einer besonders einfachen automatischen Ermittlung und gegebenenfalls Bewertung von Störungen und/oder Blockierungen in der Kommunikation mit den erwähnten Hausgeräten erzielt. Bezüglich des Ladens des Prüfprogramms bzw. von unterschiedlichen Prüfprogrammen gilt hier entsprechendes, wie es zuvor erläutert worden ist, allerdings mit der Maßgabe, dass die betreffende Übergangseinrichtung selbst gegebenenfalls das/die Prüfprogramm(e) sich von einer festgelegten Programmquelle heru n-terlädt.

Zweckmäßigerweise erfolgt die Aktivierung des genannten Prüfprogramms zur Überwachung des betreffenden ersten Kommunikationsnetzes für eine festgelegte Zeitspanne. Dadurch kann auf besonders einfache Weise Rückschluss auf mögliche Störquellen g e-schlossen werden, insbesondere dann, wenn die betreffende Zeitspanne beispielsweise auf 24 Stunden festgelegt wird und die Störungen bzw. Blockierungen nur während bestimmter Stunden oder Minuten auftreten.

Das genannte erste Kommunikationsnetz kann entweder als ein Kommunikationsleitungen umfassendes leitungsgebundenes Kommunikationsnetz betrieben werden, als dessen Kommunikationsleitungen insbesondere von einer Netzspannungsquelle gespeiste Stromversorgungsleitungen der einzelnen Hausgeräte verwendet werden, oder es kann als ein Funknetz betrieben werden, in welchem die einzelnen Hausgeräte mittels die Kommunikationseinheiten bildender Sende-/ Empfangseinrichtungen kommunizieren. In beiden Fällen ergibt sich der Vorteil eines relativ einfach aufzubauenden ersten Kommunikationsnetzes.

Zur Durchführung des Verfahrens gemäß der Erfindung dient vorzugsweise eine Vorrichtung mit einem Hausgeräte für die Durchführung von Kommunikationen verbindenden ersten Kommunikationsnetzwerk, mit dem mindestens eine Übergangseinrichtung und mit dieser gegebenenfalls über ein weiteres Kommunikationsnetz, insbesondere ein öffentliches Kommunikationsnetz zumindest ein externes Überwachungs- und Steuergerät verbunden bzw. verbindbar ist. Diese Vorrichtung ist dadurch gekennzeichnet, dass in der mit dem genannten ersten Kommunikationsnetz verbundenen Übergangseinrichtung ein für die Ermittlung der genannten Störungen und/oder Blockierungen in dem betreffenden Kommunikationsnetzwerk ausgelegtes gesondertes Prüfprogramm speicherbar oder gespeichert ist, welches auf seine Aktivierung hin die in dem betreffenden Kommunikationsnetz auftretenden Störungen und/oder Blockierungen zu erfassen und gegebenenfalls nach Art, Umfang und Dauer zu bewerten gestattet. Hierdurch ergibt sich der Vorteil eines besonders geringen Aufwands, um Störungen und/oder Blockierungen in der Kommunikation mit an dem genannten ersten Kommunikationsnetzwerk angeschlossenen Hausgeräten zu ermitteln und gegebenenfalls zu bewerten.

Zweckmäßigerweise ist ein Aktivieren und ein gegebenenfalls zuvor erfolgendes Laden des genannten Prüfprogramms in der/in die genannte(n) Übergangseinrichtung(en) von dem mit der betreffenden Übergangseinrichtung gegebenenfalls über das genannte weitere Kommunikationsnetzwerk verbundenen Überwachungs- und Steuergerät vornehmbar. Hierdurch wird der Vorteil erzielt, dass mit einem besonders geringen schaltungstechnischen Aufwand erreicht ist, dass die Aktivierung des genannten Prüfprogramms auf eine individuelle Meldung hin von dem erwähnten Steuerungs- und/oder Überwachungsgerät aus vornehmbar ist.

Alternativ zu der vorstehend gerade betrachteten zweckmäßigen Weiterbildung der Vor richtung gemäß der Erfindung ist ein Aktivieren und ein gegebenenfalls zuvor erfolgendes Laden des genannten Prüfprogramms in der betreffenden Übergangseinrichtung von dieser selbst vornehmbar, nachdem diese durch sporadische oder in größere Zeitabständen erfolgende Überwachung des genannten ersten Kommunikationsnetzes Störungen und/oder Blockierungen in diesem Kommunikationsnetz ermittelt hat. Hierdurch ergibt sich der Vorteil, dass mit besonders geringem schaltungstechnischen Aufwand erreicht ist, dass eine besonders einfache automatische Ermittlung und gegebenenfalls Bewertung von Störungen und/oder Blockierungen in der Kommunikation mit den erwähnten Hausgeräten erzielt wird.

Anhand einer Zeichnung wird die Erfindung nachstehend an einem Ausführungsbeispiel näher erläutert.

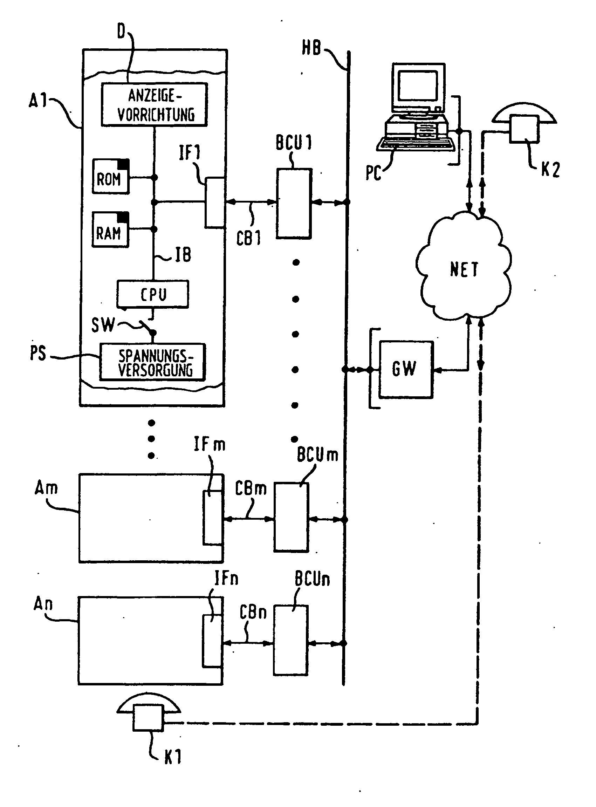

In der Zeichnung ist schematisch eine Mehrzahl von Hausgeräten A1...Am, An dargestellt, die über Kommunikationseinheiten BCU1...BCUm, BCUn an einem ersten Kommunikationsnetz HB angeschlossen sind. Dieses Kommunikationsnetz HB ist über wenigstens eine Übergangseinrichtung GW und ein mit dieser verbundenes zweites Kommunikationsnetz NET mit zumindest einem externen Steuerungs- und/oder Überwachungsgerät PC verbindbar.

Die Tatsache, dass die Übergangseinrichtung GW und das externe Steuerungs- und/oder Überwachungsgerät PC jeweils in einer Mehrzahl vorgesehen sein können, ist in der Zeichnung durch Vervielfachungszeichen an den in Frage kommenden Verbindungsleitungen angedeutet. So ist ein solches Vervielfachungszeichen an der die dargestellte eine Übergangseinrichtung GW mit dem ersten Kommunikationsnetz HB verbindenden Verbindungsleitung angegeben, und ein weiteres Vervielfachungszeichen ist an der das dargestellte Steuerungs- und/oder Überwachungsgerät PC mit dem zweiten Kommunikationsnetz NET verbindenden Verbindungsleitung angegeben.

Bei den in der Zeichnung angedeuteten Hausgeräten A1...Am, An handelt es sich beispielsweise zu einem Haushalt oder zu mehreren Haushalten gehörende gleichartige oder unterschiedliche Hausgeräte, wie beispielsweise um eine Waschmaschine, einen Elektroherd, einen Geschirrspüler, ein Mikrowellengerät, einen Kühlschrank, eine Dunstabzugshaube, eine Klimaanlage, eine Kaffeemaschine, einen Staubsauger, eine Kochmulde oder einen Gefrierschrank. Die betreffenden Hausgeräte A1...Am, An sind hier nicht im einzelnen dargestellt; vielmehr sind lediglich die für ein Verständnis der vorliegenden Erfindung notwendigen Elemente gezeigt, und zwar genauer gesagt lediglich bezüglich des Hausgeräts A1.

Zu den vorstehend erwähnten Elementen des Hausgeräts A1 gehört unter anderem eine Zentraleinheit CPU, die an einem internen Bus IB angeschlossen ist, an dem ferner ein Festspeicher ROM und ein Schreib-Lesespeicher RAM sowie eine Anzeigevorrichtung D angeschlossen sind. In dem Festspeicher ROM können für den Betrieb des Hausgerätes A1 dienende Arbeitsprogramme gespeichert sein, die mit Hilfe der Zentraleinheit CPU ausführbar sind. Der Schreib-Lese-Speicher RAM dient im Zuge der Ausführung derartiger Arbeitsprogramme als Arbeitsspeicher des dargestellten Rechnersystems.

Die Zentraleinheit CPU ist über einen in der Zeichnung angedeuteten Schalter SW an einer Spannungsversorgungseinrichtung PS angeschlossen, die hier eine eigene bzw. gesonderte Spannungsversorgungseinrichtung des Hausgeräts A1 ist und die beispielsweise bei Ausfall der für den Betrieb des betreffenden Hausgeräts A1 dienenden Versorgungs- bzw. Netzspannung dann noch zur Verfügung steht, um von dem dargestellten Rechnersystem bestimmte Zustands- bzw. Meldesignale für eine mögliche Femabfrage bereitstellen zu können.

Mit dem internen Bus IB des Hausgeräts A1 ist im vorliegenden Fall noch eine Schnittstelleneinrichtung IF1 verbunden, die für Kommunikationsverbindungen zu und von dem betreffenden Hausgerät A1 dient. Die betreffende Schnittstelleneinrichtung IF1 kann beispielsweise eine serielle oder parallele Schnittstelleneinrichtung sein, wie sie für die Datenübertragung üblicherweise eingesetzt sind. Über diese Schnittstelleneinrichtung IF1 kann beispielsweise die zuvor erwähnte Fernabfrage erfolgen.

Bezüglich der in der Zeichnung dargestellten übrigen Hausgeräte Am und An ist anzumerken, dass diese in gleicher Weise aufgebaut sein können wie das zuvor erläuterte Hausgerät A1. Die beiden Hausgeräte Am und An sind jeweils mit einer eigenen Schnittstelleneinrichtung IFm bzw. IFn entsprechend der zuvor erwähnten Schnittstelleneinrichtung IF1 ausgestattet. Diese Schnittstelleneinrichtungen IFm, IFn können ebenfalls parallele oder serielle Schnittstelleneinrichtungen sein.

Mit ihren Schnittstelleneinrichtungen IF1...IFm, IFn sind die Hausgeräte A1...Am, An über in der Zeichnung als bidirektional betriebene Verbindungsleitungen dargestellte Anschlussleitungen CB1...CBm, CBn mit zugehörigen Kommunikationseinheiten BCU1... BCUm, BCUn verbunden. Diese Kommunikationseinheiten können im vorliegenden Fall durch sogenannte Buskoppeleinheiten gebildet sein. Über diese Buskoppeleinheiten bzw. Buskoppler BCU1, BCUm, BCUn sind die Hausgeräte A1...Am, An an einem ersten Kommunikationsnetz angeschlossen, welches in der Zeichnung durch ein eine einzige Busleitung umfassendes leitungsgebundenes Kommunikationsnetz dargestellt ist, das über eine Vielzahl von Einzelleitungen verfügen kann. Die das erwähnte erste Kommunikationsnetz bildende Busleitung HB kann in dem Fall, dass die Hausgeräte A1...Am, An sich beispielsweise in einem Haus oder in einander benachbarten Häusern befinden, ein sogenannter Heimbus sein, der für sämtliche in dem betreffenden Haus oder in den betreffenden Häusern vorhandenen Hausgeräte das erste Kommunikationsnetz darstellt.

An dieser Stelle sei angemerkt, dass das erste Kommunikationsnetz HB auch ein leitungsgebundenes Kommunikationsnetz sein kann, dessen Kommunikationsleitungen durch von einer Netzspannungsquelle gespeiste Stromversorgungsleitungen der einzelnen Hausgeräte gebildet sind. Dies heißt, dass in diesem Falle die Kommunikationen zwischen den Buskoppeleinheiten BCU1...BCUm, BCUn und der Übergangseinrichtung GW über Stromversorgungsleitungen der einzelnen Hausgeräte verlaufen, die mit den betreffenden Buskoppeleinheiten BCU1...BCUm, BCUn verbunden sind.

Überdies kann das erste Kommunikationsnetz HB auch als ein Funknetz betrieben sein, in welchem die einzelnen Hausgeräte mittels Sende-Empfangseinrichtungen kommunizieren, die dann die Funktionen der erwähnten Buskoppeleinrichtungen BCU1, BCUm, BCUn erfüllen.

Mit der beim vorliegenden Ausführungsbeispiel das erste Kommunikationsnetz bildenden Busleitung HB ist mindestens eine Übergangseinrichtung GW verbunden, über die das betreffende erste Kommunikationsnetz mit einem zweiten Kommunikationsnetz NET verbunden ist, bei dem es sich vorzugsweise um ein öffentliches Kommunikationsnetz, beispielsweise um das Internet handelt. Mit dem betreffenden zweiten Kommunikationsnetz NET ist, wie in der Zeichnung angedeutet, mindestens ein externes Steuerungs- und/oder Überwachungsgerät verbunden, welches beispielsweise durch einen Personalcomputer PC gebildet sein kann.

Sind die Übergangseinrichtung GW und das Steuerungs- und/oder Überwachungsgerät jeweils in einer Mehrzal vorhanden, so können die betreffenden Übergangseinrichtungen beispielsweise mit unterschiedlichen zweiten Kommunikationsnetzen verbunden sein oder eine Erhöhung der Kommunikationslast in dem ersten Kommunikationsnetz ermöglichen. Die in einer Mehrzahl vorgesehenen Steuerungs- und/oder Überwachungsgeräte können für die Durchführung von unterschiedlichen Steuerungs- und/oder Überwachungsaufgaben ausgelegt sein.

Zusätzlich zu den vorstehend betrachteten Einrichtungen sind in der Zeichnung noch zwei Kommunikationseinrichtungen K1, K2 dargestellt, die beispielsweise durch Femsprechapparate gebildet sein können und von denen die Kommunikationseinrichtung K1 beispielsweise sämtlichen Hausgeräten A1...Am, An und die Kommunikationseinrichtung K2 dem externen Überwachungs- und Steuergerät PC zugehörig ist. Es sei an dieser Stelle angemerkt, dass die erwähnte Kommunikationseinrichtung K1 auch in einer Mehrzahl vorgesehen sein kann und dass eine jede dieser Kommunikationseinrichtungen einem der betreffenden Hausgeräte A1...Am, An zugehörig sein kann. Im übrigen ist noch anzumerken, dass die Bereitstellung dieser weiteren Kommunikationseinrichtungen K1, K2 nicht zwingend erforderlich ist, sondern dass diese nur bei Bedarf vorgesehen sein können, wie dies durch die gestrichelten Verbindungsleitungen zwischen den betreffenden Kommunikationseinrichtungen K1, K2 und dem zweiten Kommunikationsnetz NET veranschaulicht ist.

Nachdem der Aufbau der in der Zeichnung dargestellten Vorrichtung bzw. Anordnung in dem für ein Verständnis der vorliegenden Erfindung erforderlichen Umfange erläutert worden ist, soll nunmehr auf das Verfahren gemäß der vorliegenden Erfindung näher eingegangen werden.

Zuvor sei jedoch kurz auf einige Verfahrensabläufe eingegangen, die in den einzelnen Hausgeräten A1...Am, An stattfinden.

Ist beispielsweise das Hausgerät A1 eine Waschmaschine, die gerade in Betrieb ist, so wird dieser Betrieb durch ein in dem Festspeicher ROM gespeichertes Waschprogramm mittels der Zentraleinheit CPU zum Ablaufen gebracht. Bei den einzelnen Programmschritten auftretende bzw. für diese erforderliche Programmzustandswerte werden im Schreib-Lese-Speicher RAM gespeichert und können gegebenenfalls in der zugehörigen Anzeigevorrichtung D angezeigt werden.

Sofern beispielsweise Waschprogrammdaten über den erreichten Waschfortschritt von anderen Hausgeräten, wie beispielsweise einem Wäschetrockner benötigt werden, der ebenfalls an dem ersten Kommunikationsnetz HB angeschlossen ist, werden die dazu erforderlichen Kommunikationssignale von dem Hausgerät A1 über dessen Schnittstelleneinrichtung IF1 und die mit dieser verbundene Buskoppeleinheit BCU1 zum ersten Kommunikationsnetz HB übertragen und über dieses erste Kommunikationsnetz HB sowie die in Frage kommende Buskoppeleinheit, wie beispielsweise die Buskoppeleinheit BCUm, zu dem zugehörigen Wäschetrockner, der beispielsweise durch das Hausgerät Am gebildet sein mag, übertragen. Dieses Hausgerät Am bzw. der dieses Hausgerät bildende Wäschetrockner kann somit beispielsweise vorbereitende Maßnahmen für ein bevorstehendes Trocknen der noch in der erwähnten Waschmaschine befindlichen Wäsche treffen, wie ein Vorheizen.

Neben der vorstehend erwähnten Kommunikation zwischen Hausgeräten, die an dem ersten Kommunikationsnetz HB angeschlossen sind, gibt es jedoch auch noch andere Kommunikationen, in die die einzelnen Hausgeräte A1...Am, An einbezogen sind. Eine derartige Kommunikation läuft beispielsweise dann ab, wenn in eines der betreffenden Hausgeräte ein aktualisiertes Programm geladen werden soll. Ein solcher Ladevorgang kann beispielsweise von dem in der Zeichnung dargestellten externen Steuerungs- und/oder Überwachungsgerät PC über das zweite Kommunikationsnetz NET und die eine dargestellte Übergangseinrichtung GW zu dem ersten Kommunikationsnetz HB und von diesem über die zugehörige Buskoppeleinheit des in Frage kommenden Hausgerätes zu diesem hin erfolgen.

Weitere Kommunikationen mit einem Hausgerät der betrachteten Hausgeräte A1...Am, An können beispielsweise eine Ferndiagnose durch das erwähnte externe Steuerungsund/oder Überwachungsgerät PC oder eine Fernüberwachung des betreffenden Hausgeräts durch dieses externe Steuerungs- und/oder Überwachungsgerät PC sein.

Bei jeder der vorstehend betrachteten Kommunikationen werden Steuer- und/oder Datensignale über das erste Kommunikationsnetz HB übertragen. Um dabei eine sichere Kommunikation über dieses erste Kommunikationsnetz HB zu gewährleisten, sind entsprechende Sicherungsmaßnahmen in diesem ersten Kommunikationsnetz und bei der jeweiligen Signalübertragung bzw. Kommunikation zu treffen. Gleichwohl kann es jedoch vorkommen, dass die über das erste Kommunikationsnetz HB erfolgenden Kommunikationen gestört werden, und zwar kurzzeitig bzw. sporadisch oder sogar dauernd, wodurch eine Kommunikation über das betreffende erste Kommunikationsnetz HB möglicherweise blockiert ist. Dies trifft im übrigen nicht nur im Falle eines als leitungsgebundenes Kommunikationsnetz betriebenen ersten Kommunikationsnetzes HB mit eigenen Kommunikationsleitungen zu, sondern auch in dem Fall, dass das betreffende erste Kommunikationsnetz HB als ein Funknetz betrieben wird, in welchem die einzelnen Hausgeräte mittels Sende-Empfangseinrichtungen kommunizieren, die dann die Funktionen der oben erwähnten Buskoppeleinrichtungen BCU1, BCUm, BCUn erfüllen. Im Falle eines als leitungsgebundenes Kommunikationsnetz betriebenen ersten Kommunikationsnetzes HB ist noch anzumerken, dass dessen Störanfälligkeit gegebenenfalls sogar noch größer ist, wenn dessen Kommunikationsleitungen durch von einer Netzspannungsquelle gespeiste Stromversorgungsleitungen der einzelnen Hausgeräte gebildet sind. Trotz intensiver Filterungsmaßnahmen in den Buskoppeleinrichtungen BCU1, BCUm, BCUn und in der Übergangseinrichtung GW können im Falle eines derartigen, durch Stromversorgungsleitu n-gen der Hausgeräte A1...Am, An gebildeten ersten Kommunikationsnetzes HB Störungen in dieses Kommunikationsnetz eingekoppelt werden, die zur Verfälschung oder zum Verlust der übertragenen Kommunikationssignale im Rahmen der erläuterten Kommunikationen führen können.

Um Störungen und/oder Blockierungen in der Kommunikation mit den Hausgeräten A1...Am, An zu ermitteln und gegebenenfalls zu bewerten, ist gemäß der vorliegenden Erfindung vorgesehen, auf das Auftreten der betreffenden Störungen und/oder Blockierungen hin in der wenigstens einen mit dem genannten ersten Kommunikationsnetz HB verbundenen Übergangseinrichtung GW ein Prüfprogramm zu aktivieren, mit dessen Hilfe die in dem betreffenden ersten Kommunikationsnetz HB auftretenden Störungen und/oder Blockierungen erfasst und gegebenenfalls nach Art, Umfang und Dauer durch Auswertung bewertet werden. Die erwähnte Übergangseinrichtung GW ist praktisch die einzige sichere Einrichtung, die sozusagen von außen, das heißt außerhalb des ersten Kommunikationsnetzes HB erreichbar ist, um die erwähnten Störungen und/oder Blockierungen festzustellen und um die entsprechenden Informationen darüber entweder in der betreffenden Übergangseinrichtung GW zu bewerten oder zur erwähnten externen Überwachungs- und/oder Steuereinrichtung PC für eine solche Bewertung hinzuleiten. Die Hausgeräte A1...Am, An können diese Aufgabe jedenfalls im Falle der Blockierung der Kommunikation mit dem ersten Kommunikationsnetz HB nicht erfüllen, und sie können die betreffende Funktion im Falle von kurzzeitigen bzw. sporadischen Störungen der betreffenden Kommunikation, wenn überhaupt, nur recht unsicher erfüllen.

Um die Prüfung mit dem zuvor erwähnten gesonderten Prüfprogramm besonders effizient durchzuführen, werden zweckmäßigerweise durch dessen Aktivierung die Kommunikationseinheiten, das sind die Buskoppeleinheiten BCU1...BCUm, BCUn der zu dem genannten ersten Kommunikationsnetz HB gehörenden Hausgeräte A1...Am, An in einen bestimmten festgelegten Modus versetzt, in welchem die betreffenden Kommunikationseinheiten BCU1... BCUm, BCUn entsprechend einem definierten Protokoll kommunizieren. Dabei können im Zuge der Kommunikation gemäß diesem definierten Protokoll die in dem betreffenden ersten Kommunikationsnetz HB auftretenden Störungen und/oder Blockierungen ermittelt und gegebenenfalls nach Art, Umfang und Dauer bewertet werden, und zwar vorzugsweise in der genannten Übergangseinrichtung GW.

Generell ist es jedoch auch vorstellbar, dass die betreffende Ermittlung und Auswertung der erwähnten Störungen und/oder Blockierungen an anderer Stelle erfolgt, wie beispielsweise in dem in der Zeichnung dargestellten externen Steuerungs- und/oder Überwachungsgerät PC. Von Bedeutung ist hier jedoch, dass das erwähnte Prüfprogramm in der dargestellten Übergangseinrichtung GW aktiviert wird. Um diese Aktivierung vornehmen zu können, ist das erwähnte Prüfprogramm entweder in der betreffenden Übergangseinrichtung GW bereits gespeichert, oder es wird in diese Übergangseinrichtung GW gesondert eingespeichert, beispielsweise mit Hilfe des erwähnten Steuerungs- und/oder Überwachungsgerätes PC, nachdem diesem eine Meldung über das Vorliegen der erwähnten Störungen und/oder Blockierungen zugegangen ist. Prinzipiell kann eine solche Meldung von einem der Hausgeräte A1...Am, An über die dargestellten Kommunikationsnetze dem betreffenden Steuerungs- und/oder Überwachungsgerät PC zugeleitet werden. Zumindest im Falle der Blockierung der Kommunikationen in dem ersten Kommunikationsnetz HB kann diese Meldung jedoch nicht zum gewünschten Ziel gelangen. Deshalb kann in diesem Falle die in der Zeichnung dargestellte alternative Kommunikationsverbindung zwischen den oben erwähnten Kommunikationseinrichtungen K1 und K2 genutzt werden, um über diesen Kommunikationsweg dem Steuerungs- und/oder Überwachungsgerät PC eine Meldung darüber zukommen zu lassen, das erwähnte Prüfprogramm in der genannten Übergangseinrichtung GW zu aktivieren bzw. gegebenenfalls dort zuvor zu installieren.

Durch die vorstehend erläuterten Maßnahmen gemäß der Erfindung zur Ermittlung und gegebenenfalls zur Bewertung von kurzzeitig oder dauernd auftretenden Störungen und/oder Blockierungen in der Kommunikation mit den Hausgeräten A1...Am, An ist es somit möglich, ohne zusätzlichen personellen Aufwand vor Ort, das heißt am Ort, an dem sich die betreffenden Hausgeräte A1...Am, An befinden, dennoch die betreffenden Störungen bzw. Blockierungen zu ermitteln und gegebenenfalls zu bewerten. Dabei kann gerade durch die Festlegung des Kommunikationsmodus in den einzelnen Kommunikationseinheiten BCU1...BCUm, BCUn und durch die Durchführung von Kommunikationen entsprechend einem definierten Protokoll ermittelt werden, ob die aufgetretenen bzw. auftretenden Störungen bzw. Blockierungen auf die einzelnen Hausgeräte A1...Am, An bzw. auf deren zugehörige Buskoppeleinheiten BCU1...BCUm, BCUn zurückgehen oder ob andere Quellen für die betreffenden Störungen bzw. Blockierungen verantwortlich sind. In diesem Zusammenhang läßt die während einer festgelegten Zeitspanne von beispielsweise 24 Stunden erfolgende Aktivierung des erwähnten Prüfprogramms relativ leicht Störquellen erkennen, die lediglich während einer begrenzten Dauer innerhalb dieser Zeitspanne aktiv sind.

## Patentansprüche

1. Verfahren zur Ermittlung von auftretenden Störungen und/oder Blockierungen in der Kommunikation mit Hausgeräten, die mit Kommunikationseinheiten zur Abgabe und/oder Aufnahme von Kommunikationssignalen durch ein erstes Kommunikationsnetz verbunden sind, das über wenigstens eine Übergangseinrichtung mit zumindest einem externen Steuerungs- und/oder Überwachungsgerät verbindbar ist, wobei auf das Auftreten der genannten Störungen und/oder Blockierungen hin in der wenigstens einen mit dem genannten ersten Kommunikationsnetz (HB) verbundenen Übergangseinrichtung (GW) ein Prüfprogramm aktiviert wird, mit dessen Hilfe die in dem betreffenden ersten Kommunikationsnetz (HB) auftretenden Störungen und/oder Blockierungen erfasst werden, **dadurch gekennzeichnet, dass** durch die Aktivierung des genannten Prüfprogramms die Kommunikationseinheiten (BCU1 ...BCUm, BCUn) der zu dem genannten ersten Kommunikationsnetz (HB) gehörenden Hausgeräte (A1...Am, An) in einen bestimmten festgelegten Modus versetzt werden, in welchem die betreffenden Kommunikationseinheiten (BCU1 ...BCUm, BCUn) entsprechend einem definierten Protokoll kommunizieren, und dass im Zuge der Kommunikation entsprechend diesem definierten Protokoll die in dem betreffenden ersten Kommunikationsnetz (HB) auftretenden Störungen und/oder Blockierungen in der genannten Übergangseinrichtung (GW) ermittelt werden.

2. Verfahren nach Anspruch 1, **dadurch gekennzeichnet, dass** die Aktivierung des genannten Prüfprogramms in der betreffenden Übergangseinrichtung (GW) von dem Steuerungs- und/oder Überwachungsgerät (PC) aus auf eine an dieses Gerät (PC) abgegebene gesonderte Meldung hin von wenigstens einem der genannten Hausgeräte (A1...Am, An) und/oder von einer diesem Hausgerät (A1...Am, An) zugehörigen weiteren Kommunikationseinrichtung (K1) aus erfolgt.

3. Verfahren nach Anspruch 1, **dadurch gekennzeichnet, dass** die Aktivierung des genannten Prüfprogramms in der betreffenden Übergangseinrichtung (GW) automatisch durch die betreffende Übergangseinrichtung (GW) selbst ausgelöst wird, nachdem diese durch sporadische oder in größeren Zeitabständen erfolgende Überwachung des genannten ersten Kommunikationsnetzes (HB) Störungen und/oder Blockierungen in diesem ermittelt hat.

4. Verfahren nach einem der Ansprüche 1 bis 3, **dadurch gekennzeichnet, dass** die Aktivierung des genannten Prüfprogramms zur Überwachung des betreffenden ersten Kommunikationsnetzes (HB) für eine festgelegte Zeitspanne erfolgt.

5. Verfahren nach einem der Ansprüche 1 bis 4, **dadurch gekennzeichnet, dass** das genannte erste Kommunikationsnetz (HB) als ein Kommunikationsleitungen umfassendes leitungsgebundenes Kommunikationsnetz betrieben wird, als dessen Kommunikationsleitungen insbesondere von einer Netzspannungsquelle gespeiste Stromversorgungsleitungen der einzelnen Hausgeräte (A1...Am, An) verwendet werden.

6. Verfahren nach einem der Ansprüche 1 bis 4, **dadurch gekennzeichnet, dass** das genannte Kommunikationsnetz (HB) als ein Funknetz betrieben wird, in welchem die einzelnen Hausgeräte (A1...Am, An) mittels die Kommunikationseinheiten (BCU1...BCUm, BCUn) bildender Sende-/ Empfangseinrichtungen kommunizieren.

7. Verfahren nach einem der vorhergehenden Ansprüche, **dadurch gekennzeichnet, dass** die erfassten Störungen und/oder Blockierungen nach Art, Umfang und Dauer bewertet werden.

8. Verfahren nach einem der vorhergehenden Ansprüche, **dadurch gekennzeichnet, dass** das erste Kommunikationsnetz über ein zweites Kommunikationsnetz mit dem externen Steuerungs- und/oder Überwachungsgerät verbindbar ist.

9. Verfahren nach Anspruch 8, **dadurch gekennzeichnet, dass** das zweite Kommunikationsnetz ein öffentliches Kommunikationsnetz ist.

10. Vorrichtung zur Durchführung des Verfahren nach einem der Ansprüche 1 bis 9 mit einem Hausgeräte für die Durchführung von Kommunikationen verbindenden ersten Kommunikationsnetz, mit dem mindestens eine Übergangseinrichtung (GW) und mit dieser zumindest ein externes Überwachungs- und Steuergerät (PC) verbunden bzw. verbindbar ist, wobei in der mit dem genannten ersten Kommunikationsnetz (HB) verbundenen Übergangseinrichtung (GW) ein für die Ermittlung der genannten Störungen und/oder Blockierungen in dem betreffenden Kommunikationsnetzwerk (HB) ausgelegtes gesondertes Prüfprogramm speicherbar oder gespeichert ist, welches auf seine Aktivierung hin die in dem betreffenden Kommunikationsnetz (HB) auftretenden Störungen und/oder Blockierungen zu erfassen gestattet, **dadurch gekennzeichnet, dass** auf die Aktivierung des genannten Prüfprogramms hin die Kommunikationseinheiten (BCU1 ...BCUm, BCUn) der zu dem genannten ersten Kommunikationsnetz (HB) gehörenden Hausgeräte (A1...Am, An) in einen bestimmten festgelegten Modus versetzbar sind, in welchem die betreffenden Kommunikationseinheiten (BCU1 ...BCUm, BCUn) entsprechend einem definierten Protokoll kommunizieren, und dass im Zuge der Kommunikation entsprechend diesem definierten Protokoll die in dem betreffenden ersten Kommunikationsnetz (HB) auftretenden Störungen und/oder Blockierungen in der genannten Übergangseinrichtung (GW) ermittelbar sind.

11. Vorrichtung nach Anspruch 10, **dadurch gekennzeichnet, dass** ein Aktivieren des betreffenden Prüfprogramms in der/die genannte(n) Übergangseinrichtung (GW) von dem mit der betreffenden Übergangseinrichtung (GW) verbundenen Überwachungs- und Steuergerät (PC) vornehmbar ist.

12. Vorrichtung nach Anspruch 11, **dadurch gekennzeichnet, dass** ein zuvor erfolgendes Laden des betreffenden Prüfprogramms in der/die genannte(n) Übergangseinrichtung (GW) von dem mit der betreffenden Übergangseinrichtung (GW) verbundenen Überwachungs- und Steuergerät (PC) vornehmbar ist.

13. Vorrichtung nach Anspruch 10, **dadurch gekennzeichnet, dass** ein Aktivieren in der/die genannte(n) Übergangseinrichtung (GW) von dieser selbst vornehmbar ist, nachdem diese durch sporadische oder in größeren Zeitabständen erfolgende Überwachung des genannten ersten Kommunikationsnetzes (HB) Störungen und/oder Blockierungen in diesem Kommunikationsnetz (HB) ermittelt hat.

14. Vorrichtung nach Anspruch 13, **dadurch gekennzeichnet, dass** ein zuvor erfolgendes Laden des betreffenden Prüfprogramms in der/die genannte(n) Übergangseinrichtung (GW) von dieser selbst vornehmbar ist, nachdem diese durch sporadische oder in größeren Zeitabständen erfolgende Überwachung des genannten ersten Kommunikationsnetzes (HB) Störungen und/oder Blockierungen in diesem Kommunikationsnetz (HB) ermittelt hat.

15. Vorrichtung nach einem der Ansprüche 10 bis 14, **dadurch gekennzeichnet, dass** das Prüfprogramm auf seine Aktivierung hin die erfassten Störungen und/oder Blockierungen nach Art, Umfang und Dauer zu bewerten gestattet.

16. Vorrichtung nach einem der Ansprüche 10 bis 15, **dadurch gekennzeichnet, dass** mit der Übergangseinrichtung (GW) über ein weiteres Kommunikationsnetz das externe Überwachungs- und/oder Steuergerät (PC) verbunden bzw. verbindbar ist.

17. Vorrichtung nach Anspruch 16, **dadurch gekennzeichnet, dass** das weitere Kommunikationsnetz ein öffentliches Kommunikationsnetz ist.

## Claims

1. Method for determining disturbances and/or blockages, which occur, in the communication with domestic appliances, which are connected with communication units for output and/or reception of communications signals by way of a first communications network, which is connectible by way of at least one transfer device with at least one external control and/or monitoring apparatus, wherein on the occurrence of the said disturbances and/or blockages there is activated in at least one transfer device (GW), which is connected with the said first communications network (HB), a check program with the help of which the disturbances and/or blockages occurring in the relevant first communications network (HB) are detected, **characterised in that** through activation of the said check program the communications unit (BCU1 ... BCUm, BCUn) of the domestic appliances (A1, ... Am, An) belonging to the said first communications network (HB) are shifted into a specific fixed mode in which the relevant communications unit (BCU1 ... BCUm, BCUn) communicate in accordance with a defined protocol and that in the course of the communication the disturbances and/or blockages occurring in the relevant first communications network (HB) are determined in the said transfer device (GW) in correspondence with a defined protocol.

2. Method according to claim 1, **characterised in that** the activation of the said check program in the relevant transfer device (GW) is carried out by the control and/or monitoring apparatus (PC) on a special report, which is delivered to this apparatus (PC), from at least one of the said domestic appliances (A1 ... Am, An) and/or from a further communications device (K1) belonging to this domestic appliance (A1 ... Am, An).

3. Method according to claim 1, **characterised in that** the activation of the said check program in the relevant transfer device (GW) is triggered automatically by the relevant transfer device (GW) itself after this has determined disturbances and/or blockages in the said first communications network (HB) by monitoring thereof carried out sporadically or at greater intervals in time.

4. Method according to one of claims 1 to 3, **characterised in that** the activation of the said check program for monitoring the relevant first communications network (HB) takes place for a fixed time period.

5. Method according to one of claims 1 to 4, **characterised in that** the said first communications network (HB) is operated as a wire-bound communications network comprising communications lines, as the communications lines of which use is made in particular of current supply lines, which are supplied by a mains voltage source, of the individual domestic appliances (A1 ... Am, An).

6. Method according to one of claims 1 to 4, **characterised in that** the said communications network (HB) is operated as a radio network, in which the individual domestic appliances (A1 ... Am, An) communicate by means of transmitter/receiver devices forming the communications units (BCU1, BCUm, BCUn).

7. Method according to one of the preceding claims, **characterised in that** the detected disturbances and/or blockages are evaluated according to kind, scope and duration.

8. Method according to one of the preceding claims, **characterised in that** the first communications network is connectible by way of a second communications network with the external control and/or monitoring apparatus.

9. Method according to claim 8, **characterised in that** the second communications network is a public communications network.

10. Device for carrying out the method according to one of claims 1 to 9 with a first communications network, which connects domestic appliances for performance of communications and with which at least one transfer device (GW) and with this at least one external monitoring and control apparatus (PC) are connected or connectible, wherein in the transfer device (GW) connected with the said first communications unit (HB) there is storable or stored a special check program which is designed for determining the said disturbances and/or blockages in the relevant communications network (HB) and which on activation thereof allows detection of disturbances and/or blockages occurring in the relevant communications network (HB), **characterised in that** on the activation of the said check program the communications units (BCU1 ... BCUm, BCUn) of the domestic appliances (A1 ... Am, An) belonging to the said first communications network (HB) can be shifted into a specific fixed mode in which the relevant communications units (BCU1 ... BCUm, BCUn) communicate in accordance with a defined protocol and that in the course of the communication the disturbances and/or blockages occurring in the relevant first communications network (HB) are ascertainable in the said transfer device (GW) in correspondence with this defined protocol.

11. Device according to claim 10, **characterised in that** an activation of the relevant check program in the said transfer device or devices (GW) can be undertaken by the monitoring and control apparatus (PC) connected with the relevant transfer device (GW).

12. Device according to claim 11, **characterised in that** a previously effected loading of the relevant check program into the said transfer device or devices (GW) can be undertaken by the monitoring and control apparatus (PC) connected with the relevant transfer device (GW).

13. Device according to claim 10, **characterised in that** an activation in the said transfer device (GW) can be undertaken by this itself after this has ascertained disturbances and/or blockages in the said first communications network (HB) by monitoring of this communications network (HB) carried out sporadically or at greater intervals in time.

14. Device according to claim 13, **characterised in that** a previously effected charging of the relevant check program in the said transfer device or devices (GW) can be undertaken by this itself after this has detected disturbances and/or blockages in the said first communications network (HB) by monitoring this communications network (HB) sporadically or at greater intervals in time.

15. Device according to one of claims 10 to 14, **characterised in that** the check program on activation thereof allows evaluation of the detected disturbances and/or blockages according to kind, scope and duration.

16. Device according to one of claims 10 to 15, **characterised in that** the external monitoring and/or control apparatus (PC) is connected or connectible with the transfer device (GW) by way of a further communications network.

17. Device according to claim 16, **characterised in that** the further communications network is a public communications network.

## Revendications

1. Procédé pour déterminer des dérangements et/ou des blocages au niveau de la communication avec des appareils ménagers qui sont reliés à des unités de communication servant à envoyer et/ou recevoir des signaux de communication grâce à un premier réseau de communication pouvant être relié à au moins un appareil de commande et/ou surveillance extérieure par le biais d'au moins un dispositif de transition, un programme de vérification étant activé dans l'au moins un dispositif de transition (GW) relié au premier réseau de communication cité (HB) suite à la survenue des dérangements et/ou blocages cités, programme à l'aide duquel les dérangements et/ou blocages survenant dans le premier réseau de communication concerné (HB) sont déterminés, **caractérisé en ce que**, grâce à l'activation du programme de vérification cité, les unités de communication (BCU1, ..., BCUm, BCUn) des appareils ménagers (A1, ..., Am, An) appartenant au premier réseau de communication cité (HB) passent dans un mode spécifié déterminé dans lequel les unités de communication concernées (BCU1, ..., BCUm, BCUn) communiquent suivant un protocole défini, et **en ce que**, au cours de la communication effectuée suivant ce protocole défini, les dérangements et/ou blocages survenant dans le premier réseau de communication concerné (HB) sont déterminés dans le dispositif de transition cité (GW).

2. Procédé selon la revendication 1, **caractérisé en ce que** l'activation du programme de vérification cité dans le dispositif de transition concerné (GW) se fait à partir de l'appareil de commande et/ou surveillance (PC) suite à un message séparé envoyé à cet appareil (PC) par au moins un des appareils ménagers cités (A1, ..., Am, An) et/ou par un autre dispositif de communication (K1) associé à cet appareil (A1, ..., Am, An).

3. Procédé selon la revendication 1, **caractérisé en ce que** l'activation du programme de vérification cité dans le dispositif de transition concerné (GW) est déclenchée automatiquement par le dispositif de transition concerné (GW) lui-même après que celui-ci a déterminé des dérangements et/ou blocages dans le premier réseau de communication cité (HB) grâce à une surveillance sporadique, ou effectuée sur des intervalles de temps plus longs, du premier réseau de communication.

4. Procédé selon l'une des revendications 1 à 3, **caractérisé en ce que** l'activation du programme de vérification cité pour surveiller le premier réseau de communication concerné (HB) s'effectue pour une période de temps fixée.

5. Procédé selon l'une des revendications 1 à 4, **caractérisé en ce que** le premier réseau de communication cité (HB) fonctionne en tant que réseau de communication par ligne comprenant des lignes de communication, les lignes d'alimentation des appareils ménagers individuels (A1, ..., Am, An), alimentées par une source de tension de réseau, étant notamment utilisées en tant que lignes de communication du réseau de communication.

6. Procédé selon l'une des revendications 1 à 4, **caractérisé en ce que** le réseau de communication cité (HB) fonctionne en tant que réseau radio dans lequel les appareils ménagers individuels (A1, ..., Am, An) communiquent au moyen de dispositifs émetteurs-récepteurs formant les unités de communication (BCU1, ..., BCUm, BCUn).

7. Procédé selon l'une des revendications précédentes, **caractérisé en ce que** les dérangements et/ou blocages déterminés sont évalués selon le type, l'ampleur et la durée.

8. Procédé selon l'une des revendications précédentes, **caractérisé en ce que** le premier réseau de communication peut être relié à l'appareil de commande et/ou surveillance extérieure par le biais d'un deuxième réseau de communication.

9. Procédé selon la revendication 8, **caractérisé en ce que** le deuxième réseau de communication est un réseau de communication public.

10. Dispositif pour exécuter le procédé selon l'une des revendications 1 à 9, comprenant un premier réseau de communication reliant des appareils ménagers pour l'exécution de communications et auquel sont reliés resp. peuvent être reliés au moins un dispositif de transition (GW) et, avec celui-ci, au moins un appareil de surveillance et commande extérieure (PC), un programme de vérification séparé étudié pour la détermination des dérangements et/ou blocages cités dans le réseau de communication concerné (HB) pouvant être mis en mémoire ou étant mémorisé dans le dispositif de transition (GW) relié au premier réseau de communication cité (HB), lequel programme de vérification permet, suite à son activation, de déterminer les dérangements et/ou blocages survenant dans le réseau de communication concerné (HB), **caractérisé en ce que**, suite à l'activation du programme de vérification cité, les unités de communication (BCU1, ..., BCUm, BCUn) des appareils ménagers (A1, ..., Am, An) appartenant au premier réseau de communication cité (HB) peuvent passer dans un mode spécifié déterminé dans lequel les unités de communication concernées (BCU1, ... , BCUm, BCUn) communiquent suivant un protocole défini, et **en ce que**, au cours de la communication effectuée suivant ce protocole défini, les dérangements et/ou blocages survenant dans le premier réseau de communication concerné (HB) peuvent être déterminés dans le dispositif de transition cité (GW).

11. Dispositif selon la revendication 10, **caractérisé en ce qu'**une activation du programme de vérification concerné dans le/les dispositif/s de transition cité/s (GW) peut être entreprise par l'appareil de surveillance et de commande (PC) relié au dispositif de transition concerné (GW).

12. Dispositif selon la revendication 11, **caractérisé en ce qu'**un chargement préalable du programme de vérification concerné dans le/les dispositif/s de transition cité/s (GW) peut être entrepris par l'appareil de surveillance et commande (PC) relié au dispositif de transition concerné (GW).

13. Dispositif selon la revendication 10, **caractérisé en ce qu'**une activation dans le/les dispositif/s de transition cité/s (GW) peut être entreprise par le dispositif de transition lui-même après qu'il a déterminé des dérangements et/ou blocages dans le premier réseau de communication cité (HB) grâce à une surveillance sporadique, ou effectuée sur des intervalles de temps plus longs, de ce réseau de communication.

14. Dispositif selon la revendication 13, **caractérisé en ce qu'**un chargement préalable du programme de vérification concerné dans le/les dispositif/s de transition cité/s (GW) peut être entrepris par le dispositif de transition lui-même après qu'il a déterminé des dérangements et/ou blocages dans le premier réseau de communication cité (HB) grâce à une surveillance sporadique, ou effectuée sur des intervalles de temps plus longs, de ce réseau de communication.

15. Dispositif selon l'une des revendications 10 à 14, **caractérisé en ce que** le programme de vérification permet, suite à son activation, d'évaluer les dérangements et/ou blocages déterminés selon le type, l'ampleur et la durée.

16. Dispositif selon l'une des revendications 10 à 15, **caractérisé en ce que** l'appareil de surveillance et/ou commande extérieure (PC) est relié resp. peut être relié au dispositif de transition (GW) par le biais d'un deuxième réseau de communication.

17. Dispositif selon la revendication 16, **caractérisé en ce que** le deuxième réseau de communication est un réseau de communication public.
